# EUROPEAN PATENT SPECIFICATION

(11) **EP 0 583 314 B1**
(45) Date of publication and mention of the grant of the patent: **02.07.1997**
(21) Application number: 92909688.1
(22) Date of filing: 07.05.1992
(51) Int. Cl.: B01D 57/02, B05B 15/12, C09D 7/00

(54) **TREATMENT AND RECYCLING OF OVERSPRAY FROM THE SPRAY APPLICATION OF WATERBORNE COATINGS**
BEHANDLUNG UND RÜCKGEWINNUNG VON OVERSPRAY ERHALTEN BEI DEM AUFSPRÜHEN VON WASSERLÖSLICHEN ÜBERZÜGEN
TRAITEMENT ET RECYCLAGE DU SURPLUS PROVENANT DE REVETEMENTS A BASE AQUEUSE APPLIQUES AU PISTOLET

(30) Priority: 08.05.1991 EP 91201107; 09.03.1992 DE 420742
(43) Date of publication of application: 23.02.1994
(73) Proprietor: Akzo Nobel N.V., 6824 BM Arnhem (NL); EISENMANN MASCHINENBAU KG (Komplementär: EISENMANN-Stiftung), D-71002 Böblingen (DE)
(72) Inventor: FREESE, Karl-Heinz, D-7000 Stuttgart (DE); GÜNTER, Gerhard, D-7505 Ettlingen (DE)
(74) Representative: Schalkwijk, Pieter Cornelis
(86) International application number: EP9200996
(87) International publication number: WO9219686

(56) References cited:
- EP-A- 0 141 171
- WO-A-87/04638
- FR-A- 1 533 226
- FR-A- 2 519 874
- FR-A- 2 548 039
- US-A- 3 748 244

## Description

### Background of the Invention

The present invention relates generally to a process for spray coating an object with a waterborne coating and, more particularly, to a process for the treatment and recycling of overspray resulting from such spray coating. The present process is applicable in general industry and, especially, in the automotive industry where car bodies and a wide variety of other larger objects are spray coated.

Efficient coating of automobiles and other larger objects with liquid coatings normally requires spray application. Current spray application techniques generate a significant amount of overspray and, in order to isolate this overspray from the immediate surrounding environment, the spraying operation is normally conducted in a spray booth.

The overspray occurring, for example, during automobile coating with waterborne coatings is normally removed from the spray booth by an exhaust air stream and/or absorbed in water (water curtains or cascades) circulated from a catchment tank. When it is considered that in one automobile spray booth alone approximately 1-1.5 tons of paints are applied daily and approximately 20-30% of this is overspray, the magnitude of the resulting waste problem is apparent.

There exist essentially two options with respect to handling this waste product - disposal and/or recycling. Because of the large volumes generated, and because of the environmental consequences involved, disposal is a burdensome and very expensive option. Recycling, therefore, becomes the desirable alternative.

Waterborne coatings utilized in general industry, and particularly in the automotive field, can include a large number of solid and/or liquid components. These components can generally be broken down into three primary categories with subcategories as set forth below:
(I) a substantial amount of water;
(II) a variety of resins (generally higher molecular weight organic compounds) including one or more of water-insoluble, water-dispersible and/or water-soluble components; and
(III) optionally, a variety of additives including, for example, water-insoluble (e.g. pigments), water-dispersible (e.g., emulsifiers, stabilizers and rheological additives) and/or water-soluble (e.g. lower molecular weight polar organic co-solvents, acids and amines) components.
The sheer variety of components makes effective treatment and recycling a difficult task.

The currently practiced recycling procedures for waterborne coatings require the addition of coagulating agents and/or detackifiers to the collected overspray. The resulting coagulate is extracted by sedimentation, flotation, filtration and/or similar separation processes, and subsequently removed from the spraying area. Due to the presence of the added chemicals, and due to the coagulated form of the recovered product, recycling is a costly and complex process. In addition, the chemical additives often affect the properties of any reclaimed product, and separation of many water-soluble materials, such as low molecular weight organic cosolvents, acids and amines, remains a problem.

Various other recycling methods have also been proposed, but none have been totally successful. For example, WO82/02543 describes a method for recovery and recycling of waterborne coating overspray, whereby the overspray is collected and separated (e.g. by a traveling screen filter or a settling tank) into a low and high solids (e.g. 10-50% solids) fraction. The solids content of the high solids fraction is preferably adjusted to fall within the range of 5-30% solids (e.g. by the addition of water), then passed in the form of a slurry to a decanter centrifuge, of a type well-known in the art, which further separates the liquid from the solids. The solid component is said to comprise about 75wt% solids, which can be utilized as a base for a reclaimed paint product, or can be further dried for disposal at a landfill. The liquid component, which can be recycled back to the spray booth, is said to typically comprise less than 1 wt% solids. As is clear, the separation methods described in the reference are generally ineffective for separating water-soluble components and, especially, the aforementioned lower molecular weight water-soluble components which tend to build up in the recycled water.

US4607592 discloses a method of processing overspray in conjunction with the use of a complicated apparatus and a burdensome procedure. Separation is accomplished via a complex and special filter and filtration technique into concentrated and clear water fraction. The concentrated fraction is said to contain the solids and water-soluble components of the overspray, with the composition of the concentrated fraction being automatically adjusted to meet the composition of the fresh paint. The reclaimed paint is then recycled by adding it to the fresh paint feed.

While it appears from US4607592 that effective separation and recycling can be accomplished through complex and burdensome means, it would be highly desirable to develop a relatively simple yet effective and efficient recycling method for such waterborne "waste" products which avoids the use of the coagulating and detackifying chemicals mentioned above, and in addition effectively and efficiently recovers all of the components in a form suitable for direct recycling.

### Summary of the Invention

A process has now been discovered which is relatively simple to implement yet results in an efficient and effective separation of such overspray into components directly suitable for recycling.

In accordance with the present invention, there is provided a process for treating overspray collected from the spray coating of an object with a waterborne coating, which waterborne coating comprises:
(A) water,
(B) a resin part including at least one of a water-insoluble, water-dispersible and/or water-soluble component, and
(C) an additive part including at least one of a water-insoluble, water-dispersible and/or water-soluble component,
which process comprises collecting at least a portion of the overspray in collection means and generating a recyclable waterborne coating stream of substantially the same composition as the waterborne coating and a recyclable water stream containing substantially none of the resin or additive parts of the waterborne coating, which process comprises the steps of:
(1a) separating the collected overspray into
   (i) a concentrated phase comprising
      (a) a substantial portion of the water-insoluble components of the resin and additive parts,
      (b) a portion of the water-dispersible components of the resin and additive parts,
      (c) a minor portion of the water and
      (d) at least a minor portion of the water-soluble components of the resin and additive parts; and
   (ii) a dilute phase comprising
      (a) a substantial portion of the water and
      (b) the remainder of the resin and additive parts not contained in the concentrated phase;
(1b) electrophoretically separating the dilute phase into
   (i) a concentrated fraction comprising
      (a) substantially all of the remainder of the resin part,
      (b) substantially all of the remainder of the water-insoluble and water-dispersible components of the additive part, and
      (c) at least a portion of the water-soluble component of the additive part; and
   (ii) a water fraction comprising
      (a) a substantial portion of the water,
      (b) the residue of the resin and additive parts not contained in the concentrated fraction;
(2) separating the water fraction into
   (i) the recyclable water stream and
   (ii) a concentrated residue stream;
(3a) recovering the concentrated phase of step (1a);
(3b) recovering the concentrated fraction of step (1b);
(4) recovering the concentrated residue stream of step (2);
(5) generating the recyclable waterborne coating stream by mixing the so-recovered concentrated phase of step (1a), concentrated fraction of step (1b) and concentrated residue stream of step (2) in a manner and with other components necessary to result in a mixture having substantially the same composition as the waterborne coating.

In the above-described process, step (1a) is generally considered to be optional, especially in the case of waterborne clearcoats which contain very small amounts of water-insoluble components. For pigmented systems and other systems containing large amounts of solids, however, greater efficiency can be achieved in the electrophoretic separation step by prior removal of a significant portion of such solids in step (1a).

When step (1a) is not utilized, the process in accordance with the present invention comprises the steps of:
(1) electrophoretically separating the collected overspray into
   (i) a concentrated fraction comprising
      (a) substantially all of the resin part,
      (b) substantially all of the water-insoluble and water-dispersible components of the additive part, and
      (c) at least a portion of the water-soluble component of the additive part; and
   (ii) a water fraction comprising
      (a) a substantial portion of the water,
      (b) the residue of the resin and additive parts not contained in the concentrated fraction;
(2) separating the water fraction into
   (i) the recyclable waste stream and
   (ii) a concentrated residue stream;
(3) recovering the concentrated fraction of step (1);
(4) recovering the concentrated residue stream of step (2);
(5) generating the recyclable waterborne coating stream by mixing the so-recovered concentrated fraction of step (1) and the concentrated residue stream of step (2) in a manner and with other components necessary to result in a mixture having substantially the same composition as the waterborne coating.

It should be noted that electrophoresis has been utilized as a means for recovery and recycling of waste solutions generated from the application of waterborne coatings by electrodeposition (see, for example, JP-LO-100135/1974). The application of electrodeposition to the recycling of overspray from spray applied waterborne coatings, however, is not known from this literature nor is it readily apparent because of the vastly different considerations in formulating and utilizing spray coatings versus electrodeposition coatings.

In conjunction with the aforementioned process, an apparatus for treating overspray produced from the spray coating of an object with a waterborne coating is also provided, which apparatus comprises:
means for collecting at least a portion of overspray and means for generating a recyclable waterborne coating stream of substantially the same composition as the waterborne coating and a recyclable water stream comprising none of the resin or additive parts of the waterborne coating and
(1) a catchment tank for holding the collected overspray;
(2) electrophoretic separating means, connected to the catchment tank, for electrophoretically separating the collected overspray into
   (i) a concentrated fraction comprising
      (a) substantially all of the resin part,
      (b) substantially all of the water-insoluble and water-dispersible components of the additive part, and
      (c) at least a portion of the water-soluble component of the additive part; and
   (ii) a water fraction comprising
      (a) a substantial portion of the water,
      (b) the residue of the resin and additive parts not contained in the concentrated fraction;
(3) means, connected to the electrophoretic separation means, for separating the water fraction into
   (i) the recyclable water stream and
   (ii) a concentrated residue stream;
(4) means, connected to the electrophoretic separation means, for recovering the concentrated fraction;
(5) means, connected to the means for separating the water fraction, for recovering the concentrated residue stream;
(6) mixing means for generating a recyclable waterborne coating stream from the concentrated fraction, the concentrated residue stream and other components necessary to result in a mixture having substantially the same composition as the waterborne coating,
wherein the recyclable waterborne coating stream comprises substantially the same composition as the waterborne coating, and the recyclable water stream contains substantially none of the resin or additive parts of the waterborne coating.
For treating overspray containing relatively large amounts of water-insoluble components, the apparatus comprises:
() means for collecting at least a portion of the overspray and means for generating a recyclable waterborne coating stream of substantially the same composition as the waterborne coating and a recyclable water containing none of the resin or additive parts of the waterborne coating and
(1) a catchment tank for holding the collected overspray;
(2a) means, interposed between the catchment tank and an electrophoretic separation means, for separating the collected overspray into
   (i) a concentrated phase comprising
      (a) a substantial portion of the water-insoluble components of the resin and additive parts,
      (b) a portion of the water-dispersible components of the resin and additive parts,
      (c) a minor portion of the water and
      (d) at least a minor portion of the water-soluble components of the resin and additive parts; and
   (ii) a dilute phase comprising
      (a) a substantial portion of the water and
      (b) the remainder of the resin and additive parts not contained in the concentrated phase;
(2b) electrophoretic separating means, connected to the means for separating the collected overspray, for electrophoretically separating the dilute phase into
   (i) a concentrated fraction comprising
      (a) substantially all of the resin part,
      (b) substantially all of the water-insoluble and water-dispersible components of the additive part, and
      (c) at least a portion of the water-soluble component of the additive part; and
   (ii) a water fraction comprising
      (a) a substantial portion of the water,
      (b) the residue of the resin and additive parts not contained in the concentrated fraction;
(3) means, connected to the electrophoretic separation means, for separating the water fraction into
   (i) the recyclable water stream and
   (ii) a concentrated residue stream;
(4a) means, connected to the means for separating the overspray, for recovering the concentrated phase;
(4b) means, connected to the electrophoretic separation means, for recovering the concentrated fraction;
(5) means, connected to the means for separating the water fraction, for recovering the concentrated residue stream;
(6) mixing means for generating the recyclable waterborne coating stream from the concentrated phase, the concentrated fraction, the concentrated residue stream and other components necessary to result in a mixture having substantially the same composition as the waterborne coating.

Still further, a process for spray coating an object with a waterborne coating is provided, wherein overspray is generated by the spray coating, characterized in that the overspray is treated as described above to generate the recyclable waterborne coating stream and the recyclable water stream, at least a portion of the so-generated recyclable waterborne coating stream is recycled for spray application onto the object, and at least a portion of the recyclable water stream is recycled for use in collecting the overspray.

Finally, an apparatus for spray coating an object with a waterborne coating is provided, which comprises a spray booth, the apparatus for treating overspray as described above, a means for recycling at least a portion of the so-generated recyclable waterborne coating stream for spray application onto the object, and a means for recycling at least a portion of the recyclable water stream for use in collecting the overspray.

These and other features and advantages of the present invention will be more readily understood by those skilled in the art from a reading of the following detailed description with reference to the accompanying drawings.

### Brief Description of the Drawings

Figure 1 is an overall schematic of a spray coating and overspray treating process and apparatus in accordance with the present invention.

Figure 2 is a more detailed schematic of a spray coating and overspray treating process and apparatus in accordance with the present invention.

Figures 3-5 are schematic representations of various electrophoretic separation means for use in the spray coating and overspray treating process and apparatus in accordance with the present invention.

### Detailed Description of the Preferred Embodiments

As indicated previously, waterborne coatings intended for spray application can comprise a wide variety of solid and liquid components in significantly varying amounts. These components can generally be classified into one of three well-known groups - (A) water, (B) a resin part and (C) an additive part.

As utilized herein, the resin part (B) includes those materials which ultimately form the polymer network of the film resulting from application and drying of the waterborne coating. The resin part comprises materials which are generally (but not always) organic in nature, which may be solid or liquid, which are substantially non-volatile under formulation and application conditions, and which may be water-insoluble, water-dispersible or water-soluble. These various "binder" components can comprise, for example, a variety of monomeric, oligomeric and polymeric materials which can be physically drying but preferably contain reactive functionality for crosslinking. In many cases, these binders are crosslinked with the aid of relatively large amounts of preferably multifunctional compounds which react with this functionality and are, consequently, significantly incorporated into the resulting crosslinked polymer network. These "crosslinking agents" include a wide variety of known monomeric, oligomeric and polymeric compounds and, for the purposes of the present description, are considered included in the resin part.

In contrast, curing agents which are utilized in relatively small amounts to "catalyze" the crosslinking reaction but are not significantly incorporated into the polymer network are here considered as included in the additive part (C), as are other components which similarly are not significantly chemically incorporated into the polymer network. The additive part (C) can include a wide variety of organic and inorganic, solid and liquid, water-insoluble, water-dispersible and water-soluble components such as, for example, pigments, water-miscible organic cosolvents, volatile neutralizing agents (e.g. acids and amines), biocides, rheology modifiers, non-reactive emulsifiers and stabilizers, etc.

As a general rule, waterborne coatings intended for spray application will comprise the resin (B) and additive (C) parts in combined amounts ranging from about 25 wt% to about 70 wt% based upon the total weight of the waterborne coating, with water consequently making up the remaining wt%.

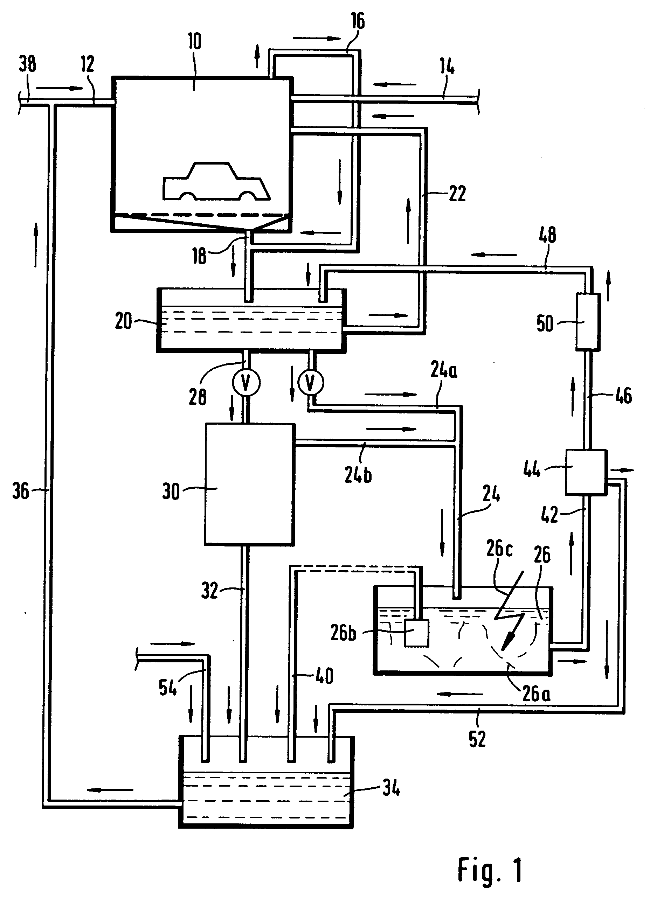

Referring now to Figure 1 in more detail, there can be seen a spray booth 10 having connected thereto a paint feed line 12, a water feed line 14, a vapor collection line 16 and a liquid collection line 18. The water feed line 14 may be connected, for example, to a water curtain (not pictured) or other similar means for collecting overspray, which collection means are in general common and well-known in this type of spray application. In fact, the spray application of waterborne coatings is in general well-known to those skilled in the art, and this aspect need not be discussed in further detail.

Referring back to Figure 1, the collected overspray is passed via lines 16 and 18 to a catchment tank 20, where it is held for further processing as discussed below. At this point, the concentration of the various components can vary widely depending upon the actual operation of the spray booth and means utilized to collect the overspray. In normal practice, at least water curtains or similar collection means are utilized, which results in a substantial dilution of the resin and additive parts of the overspray. In the present system, this dilution is preferred because a portion of the content of catchment tank 20 is supplied via line 22 to spray booth 10 for use in the collection of the overspray.

In the preferred operation, the concentration of the resin (B) and additive (C) parts in catchment tank 20 should be maintained within the range of from about 0.5 wt% to about 20 wt% based upon the total weight contained therein. At this point in the process, the proportions of the resin and additive parts relative to each other should not significantly vary from that of the fresh waterborne coating, with the possible exception of certain volatile components (e.g. low molecular weight co-solvents, acids and amines) which may evaporate prior to further treatment.

From catchment tank 20, the overspray is optionally first passed through a rough separation means (not pictured), such as a 1000 mesh sieve, to remove any large particulate or other foreign matter. Further processing of the overspray can then take one of two courses depending upon the composition of the waterborne coating. In one, the overspray is passed via lines 24a and 24 directly to an electrophoretic separation means 26. In the other, the overspray is passed via line 28 into a first separation means interposed between catchment tank 20 and electrophoretic separation means 26.

If the coating contains significant amounts of solid components, and especially water-insoluble solids such as pigments, for most efficient operation of electrophoretic separation means 26 it is preferred that the overspray first be passed via line 28 into first separation means 30, which is capable of separating out a substantial portion of these water-insoluble components and at least a portion of the water-dispersible components of (B) and (C).
First separation means 30 can take any one of a number of forms well-known for separating solids from liquids such as, for example, settling tanks, centrifuges, sedimentation filters and the like, as well as combinations thereof. Of these various well-known options, it is preferred to utilize at least a centrifuge, such as a horizontal centrifuge equipped with a screw conveyor.
The result of this first separation step is
(i) a concentrated phase of preferably less than 50% by weight, and more preferably less than 35% by weight (based upon the total weight of the concentrated phase) of water, which concentrated phase includes:
   (a) a substantial portion of the water-insoluble components of (B) and (C),
   (b) a portion of the water-dispersible components of (B) and (C),
   (c) a minor portion of the water and
   (d) at least a minor portion of the water-soluble components of (B) and (C); and
(ii) a dilute phase including:
   (a) a substantial portion of the water and
   (b) the remainder of (B) and (C) not contained in the concentrated phase.

The concentrated phase is then passed via line 32 to a recovery means 34 (e.g. a mixing tank), which in Figure 1 is utilized for recovery of the various components of (B) and (C) separated from the overspray, as well as the reformulation of these so-recovered components into a recycle stream 36 which can be recycled in combination with a fresh waterborne coating stream 38 as the paint feed (paint feed line 12). These aspects are discussed further below.

The dilute phase, which may still contain significant amounts of many of the components of (B) and (C), is then passed via lines 24b and 24 to electrophoretic separation means 26.

Electrophoretic separation means 26 is based upon electrophoresis coatings principles which are well-known to those skilled in the art and need not be explained here in detail. Further detailed information in this respect can be found by reference to any number of well-known literature sources such as, for example, Willibald Machu, Elektrotauchlackierung, Verlag Chemie, Weinheim 1974.

In general terms, electrophoretic separation means 26 comprises a bath 26a which is provided with an electrode 26b and a source of electric current 26c. Depending upon the components of the overspray, electrode 26b can be utilized as an anode (for components containing anionic groups such as carboxyl groups) or a cathode (for components containing cationic groups such as amine groups). Upon application of the electric current, substantially all of (B) and (C) are deposited on electrode 26b, leaving substantially clean water in bath 26a. The only exception is that the lower molecular weight water-soluble additives, such as organic co-solvents, acids and amines, tend to remain in solution and are only removed at this point to a minor extent.

The result of the electrophoretic separation step is a concentrated fraction comprising:
(a) substantially all of the remainder of (B),
(b) substantially all of the remainder of the water-insoluble and water-dispersible components of (C), and
(c) at least a portion of the remainder of the water-soluble component of (C); and
a water fraction comprising:
(a) a substantial portion of the water,
(b) the residue of (B) and (C) not contained in the concentrated fraction.

The concentrated fraction from the electrophoretic separation step can be recovered, for example, by removing electrode 26b from bath 26a, then cleaning the deposited material from the surface of electrode 26b. This can be accomplished in any number of ways, such as by scraping and/or soaking the electrode in a diluted solution of the original waterborne coating. The so-recovered concentrated fraction is then passed via line 40 to recovery means 34 for further processing.

The water fraction, now comprising only very small amounts of (B) and (C) contained in the original overspray, and preferably less than 1.0 wt% based upon the total weight of the water fraction, is then further processed by passing it via line 42 to a second separation means 44, where substantially the rest of these other components are removed leaving a relative high purity water stream 46 which can, for example, be recycled back via line 48 to catchment tank 20, or which can be safely and easily disposed of. Prior to recycling of water stream 46, it is preferably passed by an ultra-violet light source 50 to prevent bacteria build-up in the system.

Second separation means 44 can take any one of a number of forms well-known for separation of solutions (separation on a molecular level) such as, for example, ultra- or reverse osmosis filtration. Again, these separation means are well-known to those skilled in the relevant art, and need not be discussed further here.

The concentrated residue stream produced from this separation step is passed via line 52 to recovery means 34.

Recovery means 34, therefore, will contain all of the recovered components of (B) and (C) from the overspray plus some water carried therewith. Because there has been no chemical treatment of the overspray, the recovered components are essentially in the same state as contained in the original waterborne coating, although relative concentrations may vary. In order to make the mixture suitable for recycling, that is, substantially the same composition as the original waterborne coating, the necessary components can be added via make-up line 54 and mixed into the system by well-known waterborne coating formulating techniques.

The result, as indicated above, is a recyclable paint stream of substantially the same composition as the original waterborne coating, which can be recycled via line 36 and combined with fresh waterborne coating from line 38 for spray application.

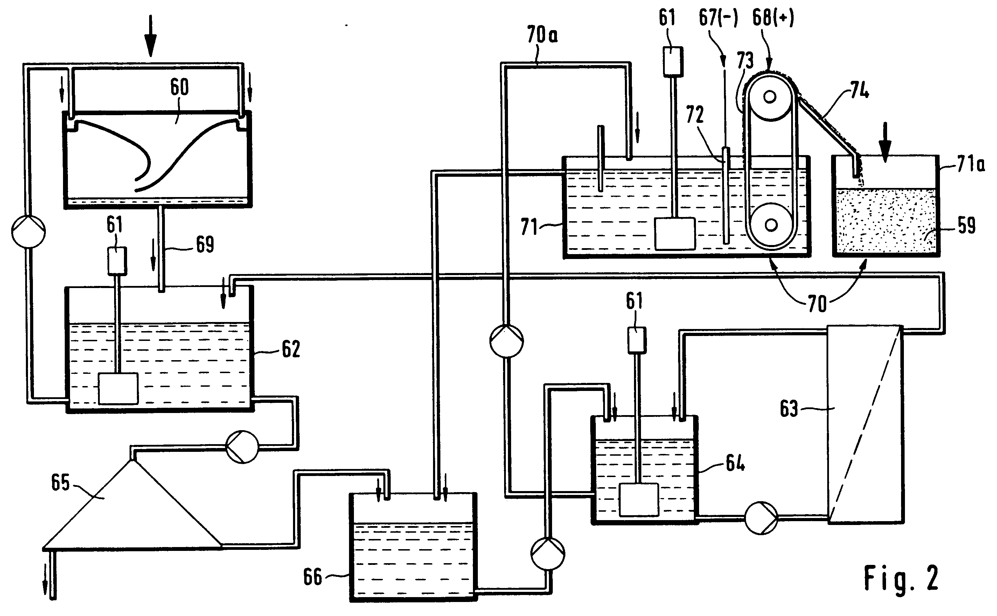

Referring now to Figure 2, there is shown a more detailed representation of a recycling process and apparatus in which a spray booth 60 is connected to a catchment tank 62 to hold the collected overspray 69, catchment tank 62 being provided with a stirring means 61.

Catchment tank 62 is further connected to a separation means 65 such as a centrifuge as mentioned earlier, which substantially separates the solid components of the overspray from the other components thereof. The resulting stream which is substantially free of solid components is then passed to an intermediate tank 66 and then to a concentrate tank 64 equipped with a stirrer 61. Concentration tank 64 is in turn connected to an ultrafiltration means 63 and an electrophoretic separation means 70.

The electrophoretic separation means 70 in accordance with Figure 2 also utilizes the well-known principle of electrophoretic coating, the deposition process being controlled to such an extent that on the deposition surface 73 of electrophoretic separation means 70 a loose paint layer forms which is easily removable, e.g., via mechanical means 74 such as a scraper.

The particular construction of the electrophoretic separation means 70 of Figure 2 is generally characterized by an electrophoresis bath 71 (equipped with a stirrer 61) for receiving the stream 70a from concentrate tank 64, an electrode 67 (72) suspended in bath 71 and, as the reciprocal electrode 68, a rotating deposition surface 73 which has in adjoining arrangement one or more mechanical scraper elements 74 to remove the paint material adhering to deposition surface 73, such removed paint material 59 being consigned to a separate recovery tank 71a.

For optimum processing, it is important that the liquid currents in the electrophoresis bath 71 are influenced to such an extent that in the area of the electrodes 67 and 68 neither foam formation nor an accumulation of paint material results, and that electrophoresis bath 71 be cooled at least in the area of electrodes 67 and 68.

Since practice has shown that optimum paint deposition conditions are material-specific, the relevant settings and/or adjustments must be made for the deposition time, the amount of and allowed ripple in the applied direct current as well as the current limits and pH-value control by amine addition or the like.

Demineralized water is preferably utilized in the process (e.g., for the water curtain) for the reasons and advantages as described in DE-OS-3428300 (which is incorporated by reference).

Further, as can be seen from Figure 2, it is preferred to recycle the water obtained in the various separation steps back to the spray booth water system.

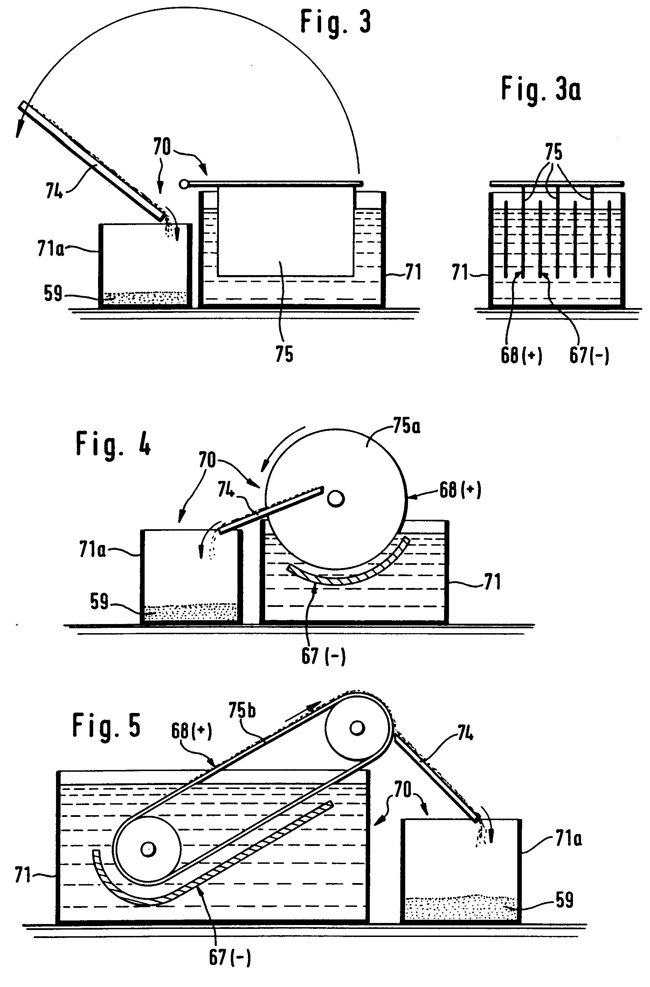

A number of alternative constructions can be provided for the deposition surface 73 and mechanical scraper elements 74 including the following;
a. A parallel arrangement of e.g. plates 75 which periodically immerse in bath 71 and which pivot together with the scraper 74 to the recovery tank 71a (Figure 3).
b. Rotating discs 75a immersed in bath 71 according to Fig. 4, whereby the scraper 74 also acts as a run-off surface for paint material 59.
c. Configuration as described under b.; utilizing however a rotating roller as alternative deposition surface (not pictured).
d. A rotating endless steel band 75b as deposition surface 73, arranged vertically or inclined in, and partially projecting from, bath 71, with a corresponding scraper 74 having a run-off surface to paint recovery tank 71a (Figure 5).

In addition, a degree of surface roughness on the deposition surfaces to improve adhesion of the paint material can be advantageous, as can also the provision of (not pictured) drying elements such as warm-air jets, infra-red lamps or the like in the area of the deposition elements not immersed in the electrophoresis bath.

Finally, warming of the bath caused by the electric current has to be counter-balanced and the necessary cooling of bath 71 results from cooling elements assigned to the area of the deposition electrodes 67,68; this can be carried out by, for example, internal cooling when using a roller 75b as deposition element, or by cooling coils on or in bath 71.

The systems described can be further supplemented by a subsequent de-watering of the paint material after the mechanical scraping procedure, for example by squeegee rollers with possible further transport of the separated paint material by means of a screw conveyor or the like to a recovery and/or storage tank (not pictured).

The great advantage, as can be seen, is that substantially nothing need be wasted in the present system since everything can be recycled. An important point is that this is accomplished without the need to add potentially detrimental chemicals to the overspray, which is the currently practiced method. Further, the presently described system is effective and efficient, yet relatively simple in its construction and implementation.

## Claims

1. A process for treating overspray collected from the spray coating of an object with a waterborne coating, which waterborne coating comprises:
(A) water,
(B) a resin part including at least one of a water-insoluble, water-dispersible and/or water-soluble component, and
(C) an additive part including at least one of a water-insoluble, water-dispersible and/or water-soluble component,
which process comprises collecting at least a portion of the overspray in collection means and generating a recyclable waterborne coating stream of substantially the same composition as the waterborne coating and a recyclable water stream containing substantially none of the resin or additive parts of the waterborne coating, characterised in that the process comprises the steps of:
(1) electrophoretically separating the collected overspray into
(i) a concentrated fraction comprising
(a) substantially all of the resin part,
(b) substantially all of the water-insoluble and water-dispersible components of the additive part, and
(c) at least a portion of the water-soluble component of the additive part; and
(ii) a water fraction comprising
(a) a substantial portion of the water,
(b) the residue of the resin and additive parts not contained in the concentrated fraction;
(2) separating the water fraction into
(i) the recyclable water stream and
(ii) a concentrated residue stream;
(3) recovering the concentrated fraction of step (1);
(4) recovering the concentrated residue stream of step (2);
(5) generating the recyclable waterborne coating stream by mixing the so-recovered concentrated fraction of step (1) and the concentrated residue stream of step (2) in a manner and with other components necessary to result in a mixture having substantially the same composition as the waterborne coating.

2. A process for treating overspray collected from the spray coating of an object with a waterborne coating, which waterborne coating comprises:
(A) water,
(B) a resin part including at least one of a water-insoluble, water-dispersible and/or water-soluble component, and
(C) an additive part including at least one of a water-insoluble, water-dispersible and/or water-soluble component,
which process comprises collecting at least a portion of the overspray in collection means and generating a recyclable waterborne coating stream of substantially the same composition as the waterborne coating and a recyclable water stream containing substantially none of the resin or additive parts of the waterborne coating, characterised in that the process comprises the steps of:
(1a) separating the collected overspray into
(i) a concentrated phase comprising
(a) a substantial portion of the water-insoluble components of the resin and additive parts,
(b) a portion of the water-dispersible components of the resin and additive parts,
(c) a minor portion of the water and
(d) at least a minor portion of the water-soluble components of the resin and additive parts; and
(ii) a dilute phase comprising
(a) a substantial portion of the water and
(b) the remainder of the resin and additive parts not contained in the concentrated phase;
(1b) electrophoretically separating the dilute phase into
(i) a concentrated fraction comprising
(a) substantially all of the remainder of the resin part,
(b) substantially all of the remainder of the water-insoluble and water-dispersible components of the additive part, and
(c) at least a portion of the water-soluble component of the additive part; and
(ii) a water fraction comprising
(a) a substantial portion of the water,
(b) the residue of the resin and additive parts not contained in the concentrated fraction;
(2) separating the water fraction into
(i) the recyclable water stream and
(ii) a concentrated residue stream;
(3a) recovering the concentrated phase of step (1a);
(3b) recovering the concentrated fraction of step (1b);
(4) recovering the concentrated residue stream of step (2);
(5) generating the recyclable waterborne coating stream by mixing the so-recovered concentrated phase of step (1a), concentrated fraction of step (1b) and concentrated residue stream of step (2) in a manner and with other components necessary to result in a mixture having substantially the same composition as the waterborne coating.

3. A process for spray coating an object with a waterborne coating which comprises:
(A) water,
(B) a resin part including at least one of a water-insoluble, water-dispersible and/or water-soluble component, and
(C) optionally, an additive part including at least one of a water-insoluble, water-dispersible and/or water-soluble component, wherein overspray is generated by the spray coating, characterized in that the overspray is treated in accordance with the process of any one of claims 1 or 2, at least a portion of the so-generated recyclable waterborne coating stream is recycled for spray application onto the object, and at least a portion of the recyclable water stream is recycled for use in collecting the overspray.

4. An apparatus for treating overspray produced from the spray coating of an object with a waterborne coating which comprises:
(A) water,
(B) a resin part including at least one of a water-insoluble, water-dispersible and/or water-soluble component, and
(C) an additive part including at least one of a water-insoluble, water-dispersible and/or water-soluble component,
which apparatus comprises means (16, 18) for collecting at least a portion of the overspray and means for generating a recyclable waterborne coating stream of substantially the same composition as the waterborne coating and a recyclable water stream containing none of the resin or additive parts of the waterborne coating, characterised in that the apparatus comprises
(1) a catchment tank (20) for holding the collected overspray;
(2) electrophoretic separating means (26), connected to the catchment tank (20), for electrophoretically separating the collected overspray into
(i) a concentrated fraction comprising
(a) substantially all of the resin part,
(b) substantially all of the water-insoluble and water-dispersible components of the additive part, and
(c) at least a portion of the water-soluble component of the additive part; and
(ii) a water fraction comprising
(a) a substantial portion of the water,
(b) the residue of the resin and additive parts not contained in the concentrated fraction;
(3) means (44), connected to the electrophoretic separation means (26), for separating the water fraction into
(i) a recyclable water stream and
(ii) a concentrated residue stream;
(4) means (40), connected to the electrophoretic separation means (26), for recovering the concentrated fraction;
(5) means (52), connected to the means (44) for separating the water fraction, for recovering the concentrated residue stream;
(6) mixing means (34) for generating a recyclable waterborne coating stream from the concentrated fraction, the concentrated residue stream and other components necessary to result in a mixture having substantially the same composition as the waterborne coating,
wherein the recyclable waterborne coating stream (36) comprises substantially the same composition as the waterborne coating, and the recyclable water stream (48) contains substantially none of the resin or additive parts of the waterborne coating.

5. An apparatus for treating overspray produced from the spray coating of an object with a waterborne coating which comprises:
(A) water,
(B) a resin part including at least one of a water-insoluble, water-dispersible and/or water-soluble component, and
(C) an additive part including at least one of a water-insoluble, water-dispersible and/or water-soluble component,
which apparatus comprises means (16, 18) for collecting at least a portion of the overspray and means for generating a recyclable waterborne coating stream of substantially the same composition as the waterborne coating and a recyclable water stream containing none of the resin or additive parts of the waterborne coating, characterised in that the apparatus comprises
(1) a catchment tank (20) for holding the collected overspray;
(2a) means (30), interposed between the catchment tank (20) and an electrophoretic separation means (26), for separating the collected overspray into
(i) a concentrated phase comprising
(a) a substantial portion of the water-insoluble components of the resin and additive parts,
(b) a portion of the water-dispersible components of the resin and additive parts,
(c) a minor portion of the water and
(d) at least a minor portion of the water-soluble components of the resin and additive parts; and
(ii) a dilute phase comprising
(a) a substantial portion of the water and
(b) the remainder of the resin and additive parts not contained in the concentrated phase;
(2b) electrophoretic separating means (26), connected to the means for separating the collected overspray, for electrophoretically separating the dilute phase into
(i) a concentrated fraction comprising
(a) substantially all of the resin part,
(b) substantially all of the water-insoluble and water-dispersible components of the additive part, and
(c) at least a portion of the water-soluble component of the additive part; and
(ii) a water fraction comprising
(a) a substantial portion of the water,
(b) the residue of the resin and additive parts not contained in the concentrated fraction;
(3) means (44), connected to the electrophoretic separation means (26), for separating the water fraction into
(i) the recyclable water stream and
(ii) a concentrated residue stream;
(4a) means (32), connected to the means for separating the overspray (30), for recovering the concentrated phase;
(4b) means (40), connected to the electrophoretic separation means (26), for recovering the concentrated fraction;
(5) means (52), connected to the means (44) for separating the water fraction, for recovering the concentrated residue stream;
(6) mixing means (34) for generating the recyclable waterborne coating stream from the concentrated phase, the concentrated fraction, the concentrated residue stream and other components necessary to result in a mixture having substantially the same composition as the waterborne coating,
wherein the recyclable waterborne coating stream (36) comprises substantially the same composition as the waterborne coating, and the recyclable water stream (48) contains substantially none of the resin or additive parts of the waterborne coating.

6. An apparatus for spray coating an object with a waterborne coating which comprises:
(A) water,
(B) a resin part including at least one of a water-insoluble, water-dispersible and/or water-soluble component, and
(C) optionally, an additive part including at least one of a water-insoluble, water-dispersible and/or water-soluble component,
characterized in that the apparatus comprises a spray booth (60) having connected thereto the apparatus for treating overspray as set forth in any one of claims 4 or 5, a means for recycling at least a portion of the so-generated recyclable waterborne coating stream for spray application onto the object, and a means for recycling at least a portion of the recyclable water stream for use in collecting the overspray.

7. The apparatus according to any one of claims 4-6, characterized in that the electrophoretic separation means (70) comprises an electrophoresis bath (71), an electrode (67, 72) and a reciprocal electrode (68) as deposition surface (73) suspended in the electrophoresis bath (71), a mechanical means (74) in adjoining arrangement to the reciprocal electrode for removing a paint layer formed on the reciprocal electrode, and a recovery tank (71a) for receiving the paint layer (59) removed from the reciprocal electrode by the mechanical means.

8. The apparatus according to claim 7, characterized in that the deposition surface (73) comprises a parallel arrangement of plates (75) which pivot together with a scraper (74) as mechanical means to the recovery tank (71a).

9. The apparatus according to claim 7, characterized in that the deposition surface comprises a rotating disc (75a) partially immersed in the electrophoresis bath (71), whereby the mechanical means (74) is arranged so that it acts as a run-off surface to the recovery tank (71a).

10. The apparatus according to claim 7, characterized in that the deposition surface comprises a rotating roller partially immersed in the electrophoresis bath (71), whereby the mechanical means is arranged so that it acts as a run-off surface to the recovery tank (71a).

11. The apparatus according to claim 7, characterized in that the deposition surface (78) comprises a vertical or inclined endless steel band (75b) partially immersed in the electrophoresis bath (71), whereby the mechanical means (74) is arranged so that it acts as a run-off surface to the recovery tank (71a).

12. The apparatus according to any one of claims 7-11, characterized in that the surface of the deposition surface possesses a sufficient roughness in order to improve adhesion of the paint layer deposited thereon.

13. The apparatus according to any one of claims 7-12, characterized in that cooling elements are provided in the electrophoresis bath in the area of the electrode and reciprocal electrode.

14. The apparatus according to any one of claims 7-12, characterized in that drying elements are provided in the area of the reciprocal electrode not immersed in the electrophoresis bath.

## Patentansprüche

1. Verfahren zur Behandlung von beim Sprühbeschichten eines Gegenstandes mit einem wasserhaltigen Beschichtungsmittel gesammeltem Sprühüberschuss, wobei das wasserhaltige Beschichtungsmittel
(A) Wasser,
(B) eine Harzkomponente enthaltend mindestens eine wasserunlösliche, wasserdispergierbare und/oder wasserlösliche Komponente, und
(C) einen Additivanteil enthaltend mindestens eine wasserunlösliche, wasserdispergierbare und/oder wasserlösliche Komponente
enthält, bei welchem Verfahren mindestens ein Teil des Sprühüberschusses in Sammelmitteln gesammelt wird und wobei ein rückführbarer wasserhaltiger Beschichtungsmittelstrom mit praktisch gleicher Zusammensetzung wie das wasserhaltige Beschichtungsmittel sowie ein rückführbarer Wasserstrom entsteht, der praktisch keine Harz- oder Additivanteile des wasserhaltigen Beschichtungsmittels enthält, dadurch gekennzeichnet, dass das Verfahren die Schritte umfasst:
(1) elektrophoretische Trennung des gesammelten Sprühüberschusses in
(i) eine konzentrierte Fraktion enthaltend
(a) praktisch den gesamten Harzanteil,
(b) praktisch alle wasserunlöslichen und wasserdispergierbaren Komponenten des Additivanteils und
(c) mindestens einen Teil der wasserlöslichen Komponente des Additivanteils und
(ii) eine Wasserfraktion enthaltend
(a) einen wesentlichen Anteil des Wassers,
(b) den Rückstand der Harz- und Additivanteile, die nicht in der konzentrierten Fraktion enthalten sind;
(2) Trennen der Wasserfraktion in
(i) den rückführbaren Wasserstrom und
(ii) einen konzentrierten Reststrom;
(3) Gewinnen der konzentrierten Fraktion von Schritt (1);
(4) Gewinnen des konzentrierten Reststromes von Schritt (2);
(5) Bildung des rückführbaren wasserhaltigen Beschichtungsmittelstroms durch Vermischen der so gewonnenen konzentrierten Fraktion von Schritt (1) mit dem konzentrierten Rückstandsstrom von Schritt (2) in einer solchen Weise und mit solchen anderen Komponenten, als zur Bildung einer Mischung mit praktisch gleicher Zusammensetzung wie das wasserhaltige Beschichtungsmittel benötigt wird.

2. Verfahren zur Behandlung von beim Sprühbeschichten eines Gegenstandes mit einem wasserhaltigen Beschichtungsmittel gesammeltem Sprühüberschuss, wobei das wasserhaltige Beschichtungsmittel
(A) Wasser,
(B) eine Harzkomponente enthaltend mindestens eine wasserunlösliche, wasserdispergierbare und/oder wasserlösliche Komponente, und
(C) einen Additivanteil, enthaltend mindestens eine wasserunlösliche, wasserdispergierbare und/oder wasserlösliche Komponente
enthält, bei welchem Verfahren mindestens ein Teil des Sprühüberschusses in Sammelmitteln gesammelt wird und wobei ein rückführbarer wasserhaltiger Beschichtungsmittelstrom mit praktisch gleicher Zusammensetzung wie das wasserhaltige Beschichtungsmittel sowie ein rückführbarer Wasserstrom entsteht, der praktisch keine Harz- oder Additivanteile des wasserhaltigen Beschichtungsmittels enthält, dadurch gekennzeichnet, dass das Verfahren diese Schritte umfasst:
(1a) Trennen des gesammelten Sprühüberschusses in
(i) eine konzentrierte Phase enthaltend
(a) einen wesentlichen Teil der wasserunlöslichen Komponenten der Harz- und Additivanteile,
(b) einen Teil der wasserdispergierbaren Komponenten der Harz- und Additivanteile,
(c) einen geringen Anteil Wasser und
(d) mindestens einen kleineren Anteil der wasserlöslichen Komponenten der Harz- und Additivanteile; und
(ii) eine verdünnte Phase enthaltend
(a) einen wesentlichen Teil des Wassers und
(b) den Rest der Harz- und Additivanteile, die nicht in der konzentrierten Phase enthalten sind;
(1b) elektrophoretische Trennung der verdünnten Phase in
(i) eine konzentrierte Fraktion enthaltend
(a) praktisch den gesamten Rest des Harzanteils,
(b) praktisch den gesamten Rest der wasserunlöslichen und wasserdispergierbaren Komponenten der Additivanteile und
(c) mindestens einen Teil der wasserlöslichen Komponente des Additivanteils; und
(ii) eine Wasserfraktion enthaltend
(a) einen wesentlichen Anteil des Wassers,
(b) den Rest der Harz- und Additivanteile, die nicht in der konzentrierten Fraktion enthalten sind;
(2) Trennen der Wasserfraktion in
(i) den rückführbaren Wasserstrom und
(ii) einen konzentrierten Reststrom;
(3a) Gewinnen der konzentrierten Phase von Schritt (1a);
(3b) Gewinnen der konzentrierten Fraktion von Schritt (1b);
(4) Gewinnen des konzentrierten Rückstandsstroms von Schritt (2);
(5) Bildung des rückführbaren wasserhaltigen Beschichtungsmittelstroms durch Vermischen der so gewonnenen konzentrierten Phase von Schritt (1a), der konzentrierten Fraktion von Schritt (1b) und des konzentrierten Reststroms von Schritt (2) in einer solchen Weise und mit solchen anderen Komponenten, als zur Bildung einer Mischung mit praktisch der gleichen Zusammensetzung wie das wasserhaltige Beschichtungsmittel erforderlich ist.

3. Verfahren zur Sprühbeschichten eines Gegenstandes mit einem wasserhaltigen Beschichtungsmittel, das
(A) Wasser,
(B) einen Harzanteil enthaltend mindestens eine wasserunlösliche, wasserdispergierbare und/oder wasserlösliche Komponente und
(C) gegebenenfalls einen Additivanteil enthaltend mindestens eine wasserunlösliche, wasserdispergierbare und/oder wasserlösliche Komponente enthält, wobei beim Sprühbeschichten ein Sprühüberschuss erzeugt wird, dadurch gekennzeichnet, dass der Sprühüberschuss nach dem Verfahren gemäss einem der Ansprüche 1 oder 2 behandelt wird, wobei mindestens ein Teil des so erzeugten rückführbaren wasserhaltigen Beschichtungsmittelstroms zur Sprühbeschichtung eines Gegenstandes zurückgeführt wird und mindestens ein Teil des rückführbaren Wasserstroms zur Verwendung für das Sammeln des Sprühüberschusses zurückgeführt wird.

4. Vorrichtung zur Behandlung von Sprühüberschuss, der beim Sprühbeschichten eines Gegenstandes mit einem wasserhaltigen Beschichtungsmittel erzeugt wird, das
(A) Wasser,
(B) einen Harzanteil enthaltend mindestens eine wasserunlösliche, wasserdispergierbare und/oder wasserlösliche Komponente, und
(C) einen Zusatzmittelanteil enthaltend mindestens eine wasserunlösliche, wasserdispergierbare und/oder wasserlösliche Komponente enthält,
welche Vorrichtung Mittel(16, 18) zum Sammeln mindestens eines Teils des Sprühüberschusses und Mittel zur Erzeugung eines rückführbaren wasserhaltigen Beschichtungsmittelstroms praktisch gleicher Zusammensetzung wie das wasserhaltige Beschichtungsmittel sowie eines rückführbaren Wasserstroms, der keine der Harz- oder Additivanteile des wasserhaltigen Beschichtungsmittel enthält, umfasst, dadurch gekennzeichnet, dass die Vorrichtung aufweist:
(1) einen Auffangtank (20) zur Aufnahme des gesammelten Sprühüberschusses;
(2) elektrophoretische Trennmittel (26), die mit dem Auffangtank (20) verbunden sind, um den gesammelten Sprühüberschuss elektrophoretisch zu trennen in
(i) eine konzentrierte Fraktion enthaltend
(a) praktisch den gesamten Harzanteil,
(b) praktisch alle wasserunlöslichen und wasserdispergierbaren Komponenten des Additivanteils und
(c) mindestens einen Teil der wasserlöslichen Komponente des Additivanteils; und
(ii) eine Wasserfraktion enthaltend
(a) einen wesentlichen Teil des Wassers,
(b) den Rest der Harz- und Additivanteile, die nicht in der konzentrierten Fraktion enthalten sind;
(3) Mittel (4), die mit den elektrophoretischen Trennmitteln (26) verbunden sind, um die Wasserfraktion zu trennen in
(i) einen rückführbaren Wasserstrom und
(ii) einen konzentrierten Reststrom;
(4) Mittel (40), die mit den elektrophoretischen Trennmitteln (26) verbunden sind, um die konzentrierte Fraktion zu gewinnen;
(5) Mittel (52), die mit den Mitteln (44) zur Abtrennung der Wasserfraktion verbunden sind, um den konzentrierten Reststrom zu gewinnen;
(6) Mischmittel (34) zur Erzeugung eines rückführbaren wasserhaltigen Beschichtungsmittelstroms aus der konzentrierten Fraktion, dem konzentrierten Reststrom und anderen Komponenten, die erforderlich sind, um eine Mischung mit praktisch gleicher Zusammensetzung wie das wasserhaltige Beschichtungsmittel zu ergeben,
wobei der rückführbare wasserhaltige Beschichtungsmittelstrom (36) praktisch die gleiche Zusammensetzung hat wie das wasserhaltige Beschichtungsmittel und der rückführbare Wasserstrom (48) praktisch keine Harzstrich- oder Additivanteile des wasserhaltigen Beschichtungsmittels enthält.

5. Vorrichtung zur Behandlung von Sprühüberschuss, der beim Sprühbeschichten eines Gegenstands mit einem wasserhaltigen Beschichtungsmittel entsteht, das enthält:
(A) Wasser,
(B) einen Harzanteil, enthaltend mindestens eine wasserunlösliche, wasserdispergierbare und/oder wasserlösliche Komponente, und
(C) einen Additivanteil, der mindestens eine wasserunlösliche, wasserdispergierbare und/oder wasserlösliche Komponente enthält,
welche Vorrichtung Mittel (16, 18) zum Sammeln mindestens eines Teiles des Sprühüberschusses sowie Mittel zur Erzeugung eines rückführbaren wasserhaltigen Beschichtungsmittelstroms praktisch gleicher Zusammensetzung wie das wasserhaltige Beschichtungsmittel und eines rückführbaren Wasserstroms aufweist, der praktisch keine Harz- oder Additivanteile des wassserhaltigen Beschichtungsmittels enthält, dadurch gekennzeichnet, dass die Vorrichtung aufweist:
(1) einen Sammeltank (20) zur Aufnahme des gesammelten Sprühüberschusses;
(2a) Mittel (30), die zwischen den Sammeltank (20) und ein elektrophoretisches Trennmittel (26) geschaltet sind, um den gesammelten Sprühüberschuss zu trennen in
(i) eine konzentrierte Phase, enthaltend
(a) einen wesentlichen Teil der wasserunlöslichen Komponenten der Harz- bzw. Additivanteile,
(b) einen Teil der wasserdispergierbaren Komponenten der Harz- bzw. Additivanteile,
(c) einen geringeren Anteil Wasser und
(d) mindestens einen geringeren Anteil der wasserlöslichen Komponenten der Harz- und Additivanteile; und
(ii) eine verdünnte Phase, enthaltend
(a) einen wesentlichen Teil des Wassers und
(b) den Rest der Harz- und Additivanteile, die nicht in der konzentrierten Phase enthalten sind;
(2b) Elektrophoretische Trennmittel (26), die mit den Mitteln zur Trennung des gesammelten Sprühüberschusses verbunden sind, um die verdünnte Phase elektrophoretisch zu trennen in
(i) eine konzentrierte Fraktion enthaltend
(a) praktisch den gesamten Harzanteil,
(b) praktisch die gesamten wasserunlöslichen und wasserdispergierbaren Komponenten des Additivanteils und
(c) mindestens einen Teil der wasserlöslichen Komponente des Additivanteils; und
(ii) eine Wasserfraktion enthaltend
(a) einen wesentlichen Teil des Wassers,
(b) den Rest der Harz- und Additivanteile, die nicht in der konzentrierten Fraktion enthalten sind;
(3) Mittel (44), die mit dem elektrophoretischen Trennmittel verbunden sind, um die Wasserfraktion zu trennen in
(i) den rückführbaren Wasserstrom und
(ii) einen konzentrierten Reststrom;
(4a) Mittel (32), die mit den Mitteln zur Trennung des Sprühüberschusses (30) verbunden sind, um die konzentrierte Phase zu gewinnen;
(4b) Mittel (40), die mit dem elektrophoretischen Trennmittel (26) verbunden sind, um die konzentrierte Fraktion zu gewinnen;
(5) Mittel (52), die mit den Mitteln (44) zur Trennung der Wasserfraktion verbunden sind, um den konzentrierten Reststrom zu gewinnen;
(6) Mischmittel (34) zur Erzeugung des rückführbaren wasserhaltigen Beschichtungsmittelstroms aus der konzentrierten Phase, der konzentrierten Fraktion, dem konzentrierten Reststrom und anderen Komponenten, die erforderlich sind, um eine Mischung zu ergeben, die praktisch die gleiche Zusammensetzung wie das wasserhaltige Beschichtungsmittel hat,
wobei der rückführbare wasserhaltige Beschichtungsmittelstrom (36) praktisch die gleiche Zusammensetzung wie das wasserhaltige Beschichtungsmittel aufweist und der rückführbare Wasserstrom (48) praktisch keine Harz- oder Additivanteile des wasserhaltigen Beschichtungsmittels enthält.

6. Vorrichtung zur Sprühbeschichtung eines Gegenstandes mit einem wasserhaltigen Beschichtungsmittel, das
(A) Wasser,
(B) einen Harzanteil, enthaltend mindestens eine wasserunlösliche, wasserdispergierbare und/oder wasserlösliche Komponente, und
(C) gewünschtenfalls einen Additivanteil, der mindestens eine wasserunlösliche, wasserdispergierbare und/oder wasserlösliche Komponente enthält,
dadurch gekennzeichnet, dass die Vorrichtung eine Sprühkabine (60) aufweist, mit welcher die Vorrichtung zur Behandlung des Sprühüberschusses wie in einem der Ansprüche 4-5 umschrieben verbunden ist, ein Mittel zum Rückführen mindestens eines Teils des so erzeugten rückführbaren wasserhaltigen Beschichtungsmittelstroms zur Sprühapplikation auf den Gegenstand und Mittel zur Rückführung mindestens eines Teils des rückführbaren Wasserstroms zur Verwendung für das Sammeln des Sprühüberschusses.

7. Vorrichtung nach einem der Ansprüche 4-6, dadurch gekennzeichnet, dass das elektrophoretische Trennmittel (70) ein Elektrophoresebad (71), eine Elektrode (67, 72) und eine Gegenelektrode (68) als Abscheideoberfläche (73) aufweist, die in dem Elektrophoresebad (71) aufgehängt ist, ein mechanisches Mittel (74) in benachbarter Anordnung zur Gegenelektrode zur Entfernung einer Anstrichschicht, die auf der Gegenelektrode gebildet ist, und einen Sammeltank (71a) zur Aufnahme der Anstrichschicht (59), die von der Gegenelektrode durch mechanische Mittel entfernt ist.

8. Vorrichtung nach Anspruch 7, dadurch gekennzeichnet, dass die Abscheideoberfläche (73) eine parallele Anordnung von Platten (75) aufweist, die zusammen mit einem Schaber (74) als mechanische Mittel zum Rückgewinnungstank (71a) angelenkt sind.

9. Vorrichtung nach Anspruch 7, dadurch gekennzeichnet, dass die Abscheideoberfläche eine rotierende Scheibe (75a) besitzt, die in dem Elektrophoresebad (71) eintaucht, wobei das mechanische Mittel (74) so angeordnet ist, dass es als Ablauffläche zum Rückgewinnungstank (71a) wirkt.

10. Vorrichtung nach Anspruch 7, dadurch gekennzeichnet, dass die Abscheideoberfläche eine rotierende Walze besitzt, die teilweise im Elektrophoresebad (71) eintaucht, wobei das mechanische Mittel so angeordnet ist, dass es als Ablaufoberfläche für den Rückgewinnungstank (71a) dient.

11. Vorrichtung nach Anspruch 7, dadurch gekennzeichnet, dass die Abscheideoberfläche (73) ein vertikales oder geneigtes endloses Stahlband (75b) aufweist, das teilweise im Elektrophoresebad (71) eintaucht, wobei das mechanische Mittel (74) so angeordnet ist, dass es als Ablauffläche für den Rückgewinnungstank (71a) wirkt.

12. Vorrichtung nach einem der Ansprüche 7-11, dadurch gekennzeichnet, dass die Oberfläche der Abscheidefläche eine ausreichende Rauheit aufweist, um die Haftung der darauf abgeschiedenen Anstrichschicht zu verbessern.

13. Vorrichtung nach einem der Ansprüche 7-12, dadurch gekennzeichnet, dass Kühlelemente im Elektrophoresebad im Bereich der Elektrode und der Gegenelektrode vorgesehen sind.

14. Vorrichtung nach einem der Ansprüche 7-12, dadurch gekennzeichnet, dass Trockenelemente im Bereich der nicht in das Elektrophoresebad eingetauchten Gegenelektrode vorgesehen sind.

## Revendications

1. Un procédé de traitement du surplus de pulvérisation collecté à partir du revêtement par pulvérisation d'un objet à l'aide d'un revêtement aqueux, ce revêtement aqueux comprenant :
(A)- de l'eau,
(B)- une partie résine comprenant au moins un composant insoluble dans l'eau, dispersible dans l'eau et/ou soluble dans l'eau, et
(C)- une partie additif comprenant au moins un composant insoluble dans l'eau, dispersible dans l'eau et/ou soluble dans l'eau,
ce procédé comprenant la collecte d'au moins une partie du surplus de pulvérisation dans des moyens de récupération et à générer un courant de revêtement aqueux recyclable ayant pratiquement la même composition que le revêtement aqueux, et un courant d'eau recyclable ne contenant pratiquement aucune des parties résine ou additif du revêtement aqueux, caractérisé en ce que le procédé comprend les étapes de:
(1)- séparation par électrophorèse du surplus de pulvérisation collecté en
(i) une fraction concentrée comprenant
(a) pratiquement toute la partie résine,
(b) pratiquement tous les composants insolubles dans l'eau et dispersibles dans l'eau de la partie additif, et
(c) au moins une partie du composant soluble dans l'eau de la partie additif; et
(ii) une fraction aqueuse comprenant
(a) une partie importante de l'eau,
(b) le résidu des parties résine et additif ne se trouvant pas dans la fraction concentrée;
(2) séparation de la fraction aqueuse en
(i) le courant d'eau recyclable et
(ii) un courant de résidu concentré;
(3) récupération de la phase concentrée de l'étape (1);
(4) récupération du courant de résidu concentré de l'étape (2);
(5) générer le courant de revêtement aqueux recyclable par mélange de la fraction concentrée de l'étape (1) et du courant de résidu concentré de l'étape (2), ainsi récupérés, de la façon et avec d'autres composants nécessaires pour conduire à un mélange ayant pratiquement la même composition que le revêtement aqueux.

2. Un procédé de traitement du surplus de pulvérisation collecté à l'aide d'un revêtement par pulvérisation d'un objet à l'aide d'un revêtement aqueux, ce revêtement aqueux comprenant :
(A) de l'eau,
(B) une partie résine comprenant au moins un composant insoluble dans l'eau, dispersible dans l'eau et/ou soluble dans l'eau, et
(C) une partie additif comprenant au moins un composant insoluble dans l'eau, dispersible dans l'eau et/ou soluble dans l'eau,
ce procédé comprenant la collecte d'au moins une partie du surplus de pulvérisation dans des moyens de récupération et à générer un courant de revêtement aqueux recyclable ayant pratiquement la même composition que le revêtement aqueux, et un courant d'eau recyclable ne contenant pratiquement aucune des parties résine ou additif du revêtement aqueux, caractérisé en ce que le procédé comprend les étapes consistant à :
(1a) séparation du surplus de pulvérisation collecté en
(i) une phase concentrée comprenant
(a) une partie importante des composants insolubles dans l'eau des parties résine et additif,
(b) une partie des composants dispersibles dans l'eau des parties résine et additif,
(c) une partie mineure de l'eau et
(d) au moins une partie mineure des composants solubles dans l'eau des parties résine et additif; et
(ii) une phase diluée comprenant
(a) une partie importante de l'eau et
(b) le reste des parties résine et additif ne se trouvant pas dans la phase concentrée;
(1b) séparation par électrophorèse de la phase diluée en
(i) une fraction concentrée comprenant
(a) pratiquement tout le reste de la partie résine,
(b) pratiquement tout le reste des composants insolubles dans l'eau et dispersibles dans l'eau de la partie additif, et
(c) au moins une partie du composant soluble dans l'eau de la partie additif; et
(ii) une fraction aqueuse comprenant
(a) une partie importante de l'eau,
(b) le résidu des parties résine et additif ne se trouvant pas dans la fraction concentrée;
(2) séparation de la fraction aqueuse en
(i) le courant d'eau recyclable et
(ii) un courant de résidu concentré;
(3a) récupération de la phase concentrée de l'étape (1a);
(3b) récupération de la fraction concentrée de l'étape (1b);
(4) récupération du courant de résidu concentré de l'étape (2);
(5) génération du courant de revêtement aqueux recyclable par mélange de la phase concentrée de l'étape (1a), de la fraction concentrée de l'étape (1b) et du courant de résidu concentré de l'étape (2), ainsi récupérés, de la façon et avec d'autres composants nécessaires pour conduire à un mélange ayant pratiquement la même composition que le revêtement aqueux.

3. Un procédé de revêtement par pulvérisation d'un objet à l'aide d'un revêtement aqueux, comprenant :
(A) de l'eau,
(B) une partie résine comprenant au moins un composant insoluble dans l'eau, dispersible dans l'eau et/ou soluble dans l'eau, et
(C) éventuellement, une partie additif comprenant au moins un composant insoluble dans l'eau, dispersible dans l'eau et/ou soluble dans l'eau,
dans lequel le surplus de pulvérisation est généré par le revêtement par pulvérisation, caractérisé en ce que le surplus de pulvérisation est traité conformément au procédé selon l'une quelconque des revendications 1 et 2, au moins une partie du courant de revêtement aqueux recyclable ainsi généré est recyclée pour être appliqué par pulvérisation sur l'objet, et au moins une partie du courant d'eau recyclable est recyclée pour être utilisée dans la collecte du surplus de pulvérisation.

4. Un appareil pour le traitement du surplus de pulvérisation produit à partir du revêtement par pulvérisation d'un objet à l'aide d'un revêtement aqueux, comprenant :
(A) de l'eau,
(B) une partie résine comprenant au moins un composant insoluble dans l'eau, dispersible dans l'eau et/ou soluble dans l'eau, et
(C) une partie additif comprenant au moins un composant insoluble dans l'eau, dispersible dans l'eau et/ou soluble dans l'eau,
cet appareil comprenant des moyens (16, 18) pour collecter au moins une partie du surplus de pulvérisation et des moyens pour générer un courant de revêtement aqueux recyclable ayant pratiquement la même composition que le revêtement aqueux, et un courant d'eau recyclable ne contenant aucune des parties résine ou additif du revêtement aqueux, caractérisé en ce que l'appareil comprend :
(1) un réservoir de retenue (20) pour recevoir le surplus de pulvérisation collecté;
(2) des moyens de séparation par électrophorèse (26), connectés au réservoir de retenue (20), pour séparer par électrophorèse le surplus de pulvérisation collecté en
(i) une fraction concentrée comprenant
(a) pratiquement toute la partie résine,
(b) pratiquement tous les composants insolubles dans l'eau et dispersibles dans l'eau de la partie additif, et
(c) au moins une partie du composant soluble dans l'eau de la partie additif; et
(ii) une fraction aqueuse comprenant
(a) une partie importante de l'eau,
(b) le résidu des parties résine et additif ne se trouvant pas dans la fraction concentrée;
(3) des moyens (44), connectés aux moyens de séparation par électrophorèse (26), pour séparer la fraction aqueuse en
(i) un courant d'eau recyclable et
(ii) un courant de résidu concentré;
(4) des moyens (40), connectés aux moyens de séparation par électrophorèse (26), pour récupérer la fraction concentrée;
(5) des moyens (52), connectés aux moyens de séparation de la fraction aqueuse (44), pour récupérer le courant de résidu concentré;
(6) des moyens de mélange (34) pour générer un courant de revêtement aqueux recyclable à partir de la phase concentrée, du courant de résidu concentré et d'autres composants nécessaires pour donner un mélange ayant pratiquement la même composition que le revêtement aqueux,
dans lequel le courant de revêtement aqueux recyclable (36) a pratiquement la même composition que le revêtement aqueux, et le courant d'eau recyclable (48) ne contient pratiquement rien des parties résine ou additif du revêtement aqueux.

5. Un appareil de traitement du surplus de pulvérisation produit à partir du revêtement par pulvérisation d'un objet avec un revêtement aqueux, ce dernier comprenant :
(A) de l'eau,
(B) une partie résine comprenant au moins un composant insoluble dans l'eau, dispersible dans l'eau et/ou soluble dans l'eau, et
(C) une partie additif comprenant au moins un composant insoluble dans l'eau, dispersible dans l'eau et/ou soluble dans l'eau,
cet appareil comprenant des moyens (16, 18) pour collecter au moins une partie du surplus de pulvérisation et des moyens pour générer un courant de revêtement aqueux recyclable ayant pratiquement la même composition que le revêtement aqueux, et un courant d'eau recyclable ne contenant aucune des parties résine ou additif du revêtement aqueux, caractérisé en ce que l'appareil comprend :
(1) un réservoir de retenue (20) pour conserver le surplus de pulvérisation collecté;
(2a) des moyens (30), interposés entre le réservoir de retenue (20) et des moyens de séparation par électrophorèse (26), pour séparer le surplus de pulvérisation collecté en
(i) une phase concentrée comprenant
(a) une partie importante des composants insolubles dans l'eau des parties résine et additif,
(b) une partie des composants dispersibles dans l'eau des parties résine et additif,
(c) une partie mineure de l'eau et
(d) au moins une partie mineure des composants solubles dans l'eau des parties résine et additif; et
(ii) une phase diluée comprenant
(a) une partie importante de l'eau et
(b) le reste des parties résine et additif ne se trouvant pas dans la phase concentrée;
(2b) des moyens de séparation par électrophorèse (26), connectés aux moyens de séparation du surplus de pulvérisation collecté, pour séparer par électrophorèse la phase diluée en
(i) une fraction concentrée comprenant
(a) pratiquement toute la partie résine,
(b) pratiquement tous les composants insolubles dans l'eau et dispersibles dans l'eau de la partie additif, et
(c) au moins une partie du composant soluble dans l'eau de la partie additif; et
(ii) une fraction aqueuse comprenant
(a) une partie importante de l'eau,
(b) le résidu des parties résine et additif ne se trouvant pas dans la fraction concentrée;
(3) des moyens (44), connectés aux moyens de séparation par électrophorèse (26), pour séparer la fraction aqueuse en
(i) le courant d'eau recyclable et
(ii) un courant de résidu concentré;
(4a) des moyens (32), connectés aux moyens de séparation du surplus de pulvérisation (30), pour récupérer la phase concentrée;
(4b) des moyens (40), connectés aux moyens de séparation par électrophorèse (26), pour récupérer la fraction concentrée;
(5) des moyens (52), connectés aux moyens de séparation de la fraction aqueuse (44), pour récupérer le courant de résidu concentré;
(6) des moyens de mélange (34) pour générer le courant de revêtement aqueux recyclable à partir de la phase concentrée, de la fraction concentrée, du courant de résidu concentré et d'autres composants nécessaires pour conduire à un mélange ayant pratiquement la même composition que le revêtement aqueux,
dans lequel le courant de revêtement aqueux recyclable (36) a pratiquement la même composition que le revêtement aqueux, et le courant d'eau recyclable (48) ne contient pratiquement aucune des parties résine ou additif du revêtement aqueux.

6. Un appareil de revêtement par pulvérisation d'un objet à l'aide d'un revêtement aqueux, ce dernier comprenant :
(A) de l'eau,
(B) une partie résine comprenant au moins un composant insoluble dans l'eau, dispersible dans l'eau et/ou soluble dans l'eau, et
(C) éventuellement, une partie additif comprenant au moins un composant insoluble dans l'eau, dispersible dans l'eau et/ou soluble dans l'eau,
caractérisé en ce que l'appareil comprend une cabine de pulvérisation (60) à laquelle est connecté l'appareil de traitement du surplus de pulvérisation tel que décrit dans l'une quelconque des revendications 4 et 5, des moyens pour recycler au moins une partie du courant de revêtement aqueux recyclable ainsi généré pour l'appliquer par pulvérisation sur l'objet, et des moyens pour recycler au moins une partie du courant d'eau recyclable pour l'utiliser dans la collecte du surplus de pulvérisation.

7. L'appareil selon l'une quelconque des revendications 4 à 6, caractérisé en ce que les moyens de séparation par électrophorèse (70) comprennent un bain d'électrophorèse (71), une électrode (72) et une contre-électrode (68) servant de surface de dépôt (73), suspendue dans le bain d'électrophorèse (71), des moyens mécaniques (74) en agencement d'union à la contre-électrode pour retirer une couche de peinture formée sur la contre-électrode, et un réservoir de récupération (71a) destiné à recevoir la couche de peinture (59) retirée de la contre-électrode par les moyens mécaniques.

8. L'appareil selon la revendication 7, caractérisé en ce que la surface de déposition (73) comprend un agencement parallèle de plaques (75) qui pivotent, ensemble avec une raclette (74) servant de moyens mécaniques, vers le réservoir de récupération (71a).

9. L'appareil selon la revendication 7, caractérisé en ce que la surface de dépôt comprend un disque rotatif (75a) partiellement immergé dans le bain d'électrophorèse (71), de façon que les moyens mécaniques (74) soient disposés de sorte qu'ils agissent comme surface d'écoulement vers le réservoir de récupération (71a).

10. L'appareil selon la revendication 7, caractérisé en ce que la surface de dépôt comprend un rouleau rotatif partiellement immergé dans le bain d'électrophorèse (71), de façon que les moyens mécaniques soient disposés de telle sorte qu'ils agissent comme surface d'écoulement vers le réservoir de récupération (71a).

11. L'appareil selon la revendication 7, caractérisé en ce que la surface de dépôt (73) comprend une bande sans fin verticale ou inclinée en acier (75b), partiellement immergée dans le bain d'électrophorèse (71), grâce à laquelle les moyens mécaniques (74) sont disposés de telle sorte qu'ils servent comme surface d'écoulement vers le réservoir de récupération (71a).

12. L'appareil selon l'une quelconque des revendications 7 à 11, caractérisé en ce que la surface de la surface de dépôt possède une rugosité suffisante pour améliorer l'adhérence de la couche de peinture déposée dessus.

13. L'appareil selon l'une quelconque des revendications 7 à 12, caractérisé en ce que des éléments de refroidissement sont disposés dans le bain d'électrophorèse dans la zone de l'électrode et de la contre-électrode.

14. L'appareil selon l'une quelconque des revendications 7 à 12, caractérisé en ce que des éléments de séchage sont disposés dans la zone de la contre-électrode qui n'est pas immergée dans le bain d'électrophorèse.
